# EUROPÄISCHE PATENTSCHRIFT

(11) **EP 1 918 132 B1**
(45) Veröffentlichungstag und Bekanntmachung des Hinweises auf die Patenterteilung: **18.11.2009**
(21) Anmeldenummer: 07116615.1
(22) Anmeldetag: 18.09.2007
(51) Int. Cl.: B60C 19/08, B29D 30/16, B29D 30/30, B29D 30/60

(54) **Verfahren zur Herstellung eines Fahrzeugluftreifens und Fahrzeugluftreifen**
Method for manufacturing a pneumatic tyre for a vehicle and pneumatic tyre for a vehicle
Procédé de fabrication d'un pneu de véhicule et pneu de véhicule

(30) Priorität: 31.10.2006 DE 102006051224
(43) Veröffentlichungstag der Anmeldung: 07.05.2008
(73) Patentinhaber: Continental Aktiengesellschaft, 30165 Hannover (DE)
(72) Erfinder: Frerichs, Udo, 30855, Langenhagen (DE); Seevers, Jörn, 31303, Burgdorf (DE)

(56) Entgegenhaltungen:
- EP-A- 1 175 992
- EP-A- 1 632 367
- EP-A- 1 645 442
- EP-A- 1 657 050
- JP-A- 2003 326 614

## Beschreibung

Die Erfindung betrifft ein Verfahren zur Herstellung eines Fahrzeugluftreifens mit einem eine elektrisch leitfähige Laufstreifenbase und eine elektrisch nicht leitfähige Laufstreifencap aufweisenden Laufstreifen, wobei sowohl die Laufstreifencap als auch die Laufstreifenbase jeweils durch Spulen von zumindest einem Materialstreifen aus einer entsprechenden Kautschukmischung erstellt werden und zumindest die Laufstreifencap in mehreren, vorzugsweise zwei Teilen bzw. Abschnitten gespult wird, die Capteile auf einem bereits aufgebauten Gürtelpaket des Fahrzeugluftreifens stirnseitig zusammengefügt werden, und wobei ein zwischen den Capteilen in Umfangsrichtung umlaufender Streifen bzw. Einsatz aus einer elektrisch leitfähigen Kautschukmischung zwischen der Außenseite der Laufstreifencap und der Laufstreifenbase eine elektrisch leitfähige Verbindung herstellt.

Es ist bekannt, dass Kieselsäure enthaltende Laufstreifen, die den Fahrzeugreifen an sich gute Fahreigenschaften, wie einen geringen Rollwiderstand und gute Nassrutscheigenschaften, verleihen, elektrisch kaum leitfähig sind, sodass elektrostatische Aufladungen unangenehme Entladungsvorgänge verursachen können. Es ist daher üblich, bei solchen Fahrzeugluftreifen im Laufstreifen durch elektrisch leitfähigen Gummi Passagen zu schaffen, die eine elektrisch leitfähige Verbindung von der Außenfläche des Laufstreifens zum Unterbau herstellen.

Ein Verfahren der eingangs genannten Art ist beispielsweise aus der EP-1 175 992 A2 bekannt. Dabei wird der in Umfangsrichtung umlaufende, streifenartige Einsatz aus der elektrisch leitfähigen Kautschukmischung durch spiraliges Wickeln eines unvulkanisierten Mischungsstreifens erstellt. Das spiralige Wickeln dieses Streifens kann dabei entweder vor oder nach dem Spulen der Laufstreifencap durchgeführt werden.

Bei dem aus der EP-1 645 442 A1 bekannten Verfahren wird die Laufstreifenbase aus einem Kautschukmischungsstreifen mit einer geringen elektrischen Leitfähigkeit in zwei Teilen bzw. Abschnitten auf die bereits aufgebaute und auf einer Aufbautrommel befindliche Rohreifenkarkasse gewickelt. Nachdem der erste Abschnitt der Laufstreifenbase durch spiraliges Wickeln des Laufstreifenbandes aufgebaut ist wird an diesem Abschnitt stirnseitig und in Umfangsrichtung umlaufend das elektrisch leitfähige Materialband angebracht. Auf analoge Weise wird die Laufstreifencap aus zwei Abschnitten durch Wickeln eines entsprechenden Materialbandes erstellt und ein elektrisch leitfähiges Band zwischen die beiden Abschnitten eingebracht.

Die EP-1 632 367 A1 beschreibt ein Verfahren zur Herstellung eines Reifens, bei dem die Laufstreifenbase aus einer elektrisch leitfähigen Kautschukmischung erstellt wird. Die Laufstreifencap wird durch spiraliges Wickeln eines Materialstreifens aus einer elektrisch nicht leitfähigen Kautschukmischung erstellt, wobei ein Abschnitt des Materialstreifens oberflächlich mit einem elektrisch leitfähigen Film, beispielsweise aus Graphitpulver, versehen wird, um derart im fertigen Reifen eine elektrisch leitfähige Verbindung zwischen der Laufstreifenaußenseite und der elektrisch leitfähigen Base herzustellen.

Bei dem aus der EP-1 657 050 A bekannten Verfahren wird der Laufstreifen aus einer elektrisch leitfähigen Laufstreifenbase und einer elektrisch nicht leitfähigen Laufstreifencap hergestellt, wobei beim Herstellen der Laufstreifencap zwei Auftragsvorrichtungen für Mischungsstreifen verwendet werden. Die erste Auftragsvorrichtung dient zum Führen eines nicht leitfähigen Mischungsstreifens, die zweite Auftragsvorrichtung zum Führen eines leitfähigen Mischungsstreifens. Bei höchstens fünf Wicklungen des nicht leitfähigen Mischungsstreifens wird simultan der leitfähige Mischungsstreifen mitgewickelt.

Auch bei dem aus der JP-2003 326614 A bekannten Verfahren wird beim spiraligen Wickeln eines Laufstreifens aus einem Mischungsstreifen aus einem elektrisch nicht leitfähigen Material ein gesonderter Streifen aus elektrisch leitfähigem Material eingebracht.

Bei dem aus der US 6,834,693 B1 bekannten Verfahren wird der Laufstreifen mit einer Extrusionsvorrichtung hergestellt, welche einen den kompletten Laufstreifen erzeugenden Hauptextruder und einen mit diesem zusammenarbeitenden Mikroextruder aufweist, der eine elektrisch leitfähige Kautschukmischung direkt lokal in einen Abschnitt der unvulkanisierten und heißen Kautschukmischung, welche aus dem Hauptextruder kommt, einfügt. Der fertige Reifen weist daher im Laufstreifen einen in Umfangsrichtung umlaufenden Einsatz aus elektrisch leitfähigem Gummi auf.

Aus der US 6,951,233 B1 ist ein Verfahren zur Herstellung eines Laufstreifens aus einer Laufstreifencap und einer Laufstreifenbase bekannt, welche beide aus einer elektrisch nicht leitenden Kautschukmischung hergestellt werden. Die Laufstreifenbase und die Laufstreifencap werden jeweils separat mit einem Hauptextruder hergestellt, wobei in jede dieser Kautschukmischungen in Umfangsrichtung und lokal begrenzt durch Co-Extrusion eine elektrisch leitende Kautschukmischung eingefügt wird.

Bei diesen beiden aus dem Stand der Technik bekannten Verfahren erfolgt daher ein Einfügen elektrisch leitfähiger Teile in den Laufstreifen bzw. in die Laufstreifencap und die Laufstreifenbase während der Extrusion. Diese bekannten Verfahren lassen sich bei Laufstreifen, die durch Spulen eines Materialstreifens aus einer Kautschukmischung hergestellt werden, nicht anwenden.

Der Erfindung liegt daher die Aufgabe zu Grunde, auf einfache Weise in einer durch Spulen eines Materialstreifens hergestellten Laufstreifencap aus einer elektrisch nicht leitfähigen Kautschukmischung einen umlaufenden Einsatz aus einer elektrisch leitfähigen Kautschukmischung einbringen zu können.

Gelöst wird die gestellte Aufgabe erfindungsgemäß dadurch, dass zumindest ein Abschnitt der Laufstreifencap gemeinsam mit dem zugehörigen Abschnitt der Laufstreifenbase auf einer Hilfstrommel aufgebaut wird, wobei der Streifen aus der elektrisch leitfähigen Mischung aus einem Abschnitt der Laufstreifenbase erstellt wird, und der derart aufgebaute Laufstreifenteil auf das Gürtelpaket transferiert wird.

Die Erfindung gestattet es daher, auf eine sehr effektive und zweckmäßige Weise, einen Reifen mit einer gespulten Laufstreifencap und einer gespulten Laufstreifenbase aufzubauen und dabei gleichzeitig zumindest einen Einsatz aus einer elektrisch leitfähigen Mischung herzustellen.

Es erübrigt sich das Hantieren mit einem gesonderten Streifen oder einem Füllteil aus einer elektrisch leitfähigen Kautschukmischung, da gemäß der Erfindung der Streifen aus der elektrisch leitfähigen Mischung aus der Laufstreifenbase erstellt wird.

Bei einer bevorzugten Ausführungsvariante wird ein Abschnitt der Laufstreifenbase direkt auf dem Gürtelpaket aufgebracht bzw. gespult. Dabei wird ein Abschnitt der Laufstreifencap auf den bereits auf dem Gürtelpaket aufgebrachten Abschnitt der Laufstreifenbase aufgebracht.

Um den Streifen aus der elektrisch leitfähigen Mischung aus der Laufstreifenbase zu erstellen, wird beispielsweise der Laufstreifenbaseabschnitt auf einer Hilfstrommel erstellt und über den später zu spulenden Abschnitt der Laufstreifencap hinaus gespult, wobei der überragende Teil auf die Stirnseite des erstellten Abschnittes der Laufstreifencap umgeklappt wird.

Der die Laufstreifencap überragende Teil des Laufstreifenbaseabschnittes kann dabei auf die Außenseite eines seitlich der Hilfstrommel positionierten Balges gespult werden. Durch Aufblähen des Balges erfolgt ein Umschlagen des überragenden Teils der Laufstreifenbase auf die Stirnseite der erstellten Laufstreifencap.

Bei einer alternativen Ausführungsform kann der überragende Teil des Laufstreifenbaseabschnittes auf eine schräge Rampe gespult werden, welche auf die spätere Dicke des Laufstreifens ansteigt. Diese schräge Rampe kann Bestandteil der Hilfstrommel oder eines gesonderten, seitlich der Hilfstrommel positionierbaren Bauteils sein.

Weitere Merkmale, Vorteile und Einzelheiten der Erfindung werden nun anhand der Zeichnung, die schematisch Ausführungsbeispiele darstellt, näher beschrieben. Dabei zeigen:
Fig. 1 einen Querschnitt durch den Laufstreifenbereich eines Fahrzeugluftreifens und
Fig. 2 bis Fig. 6 Stadien der Herstellung des Laufstreifens, wobei unterschiedliche Ausführungsvarianten dargestellt sind.

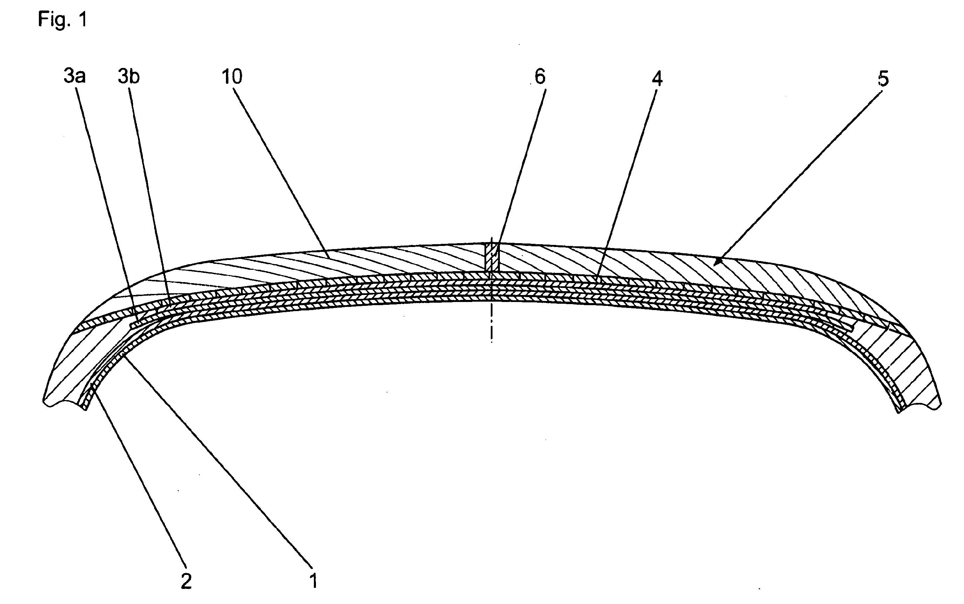

Fig. 1 zeigt schematisch einen Querschnitt durch den Laufstreifenbereich eines noch unvulkanisierten Fahrzeugluftreifens in Radialbauart für PKW. Der Reifen weist eine Innenschicht 1, eine Radialkarkasse 2, zwei Gürtellagen 3a, 3b, die durch eine nicht gezeigte Gürtelbandage abgedeckt sein können, und einen Laufstreifen auf. Der Laufstreifen besteht aus einer unmittelbar auf dem Gürtelpaket 3 angebrachten Laufstreifenbase 4 und einer Laufstreifencap 5. Bei der nachfolgenden Vulkanisation des Rohreifens in einer Vulkanisationsform wird in die Laufstreifencap 5 eine Profilierung aus Nuten, Rillen, Einschnitte und dergleichen eingeprägt.

Die Laufstreifenbase 4 wird aus einer elektrisch leitfähigen, Ruß enthaltenden Kautschukmischung durch spiraliges Wickeln, sogenanntes Spulen, eines Materialstreifens aus dieser Kautschukmischung erstellt. Die Laufstreifencap 5 wird ebenfalls durch spiraliges Wickeln bzw. Spulen eines Materialstreifens 10 aus einer elektrisch nicht leitfähigen Kautschukmischung hergestellt, welche als Füllstoff Kieselsäure und keinen oder höchstens einen sehr geringen Anteil an Ruß enthält. Ein aus einer elektrisch leitfähigen Gummimischung bestehender Streifen 6 verläuft über den gesamten Reifenumfang unter Teilung der Laufstreifencap 5 und gewährleistet daher bei fertigem Reifen eine elektrisch leitfähige Verbindung von der Laufstreifenaußenseite zum leitfähigen Unterbau des Reifens.

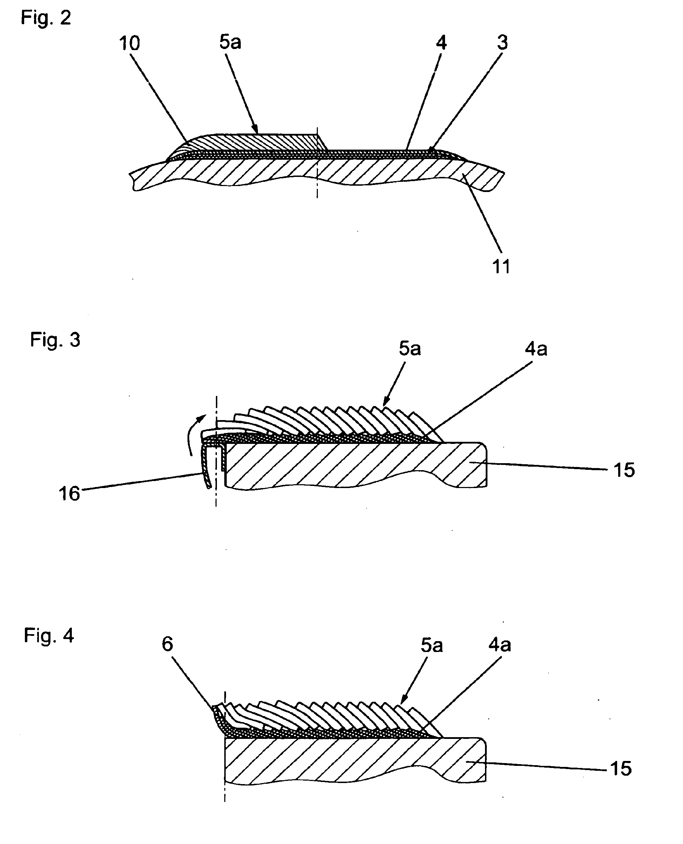

Bei der in Fig. 2 gezeigten Ausführungsvariante der Herstellung eines derartigen Laufstreifens wird auf eine Gürteltrommel 11, auf welcher bereits das Gürtelpaket 3 aufgebracht ist, die Laufstreifenbase 4 durch spiraliges Wickeln eines Materialstreifens aus der Ruß enthaltenden und elektrisch leitfähigen Mischung komplett auf den Gürtel aufgebracht. Anschließend wird ein Abschnitt 5a der Laufstreifencap 5, bei der dargestellten Ausführungsform ist der Abschnitt 5a die eine Hälfte der Laufstreifencap 5, aus einem Materialstreifen 10 durch spiraliges und überlappendes Wickeln erstellt. Wie dargestellt kann dabei der Materialstreifen 10 in einer Lage gespult werden, wobei zum Bilden der Cap 5 auch zwei Lagen des Materialstreifens 10 gespult werden können.

Fig. 3 zeigt eine Variante der Herstellung eines Teils bzw. Abschnittes 4a der Laufstreifenbase 4 und des zugehörigen Teils bzw. Abschnittes der Laufstreifencap 5 auf einer segmentierten und in bekannter Weise expandier- und einfahrebaren Hilfstrommel 15. An der einen Seite der Hilfstrommel 15 kann umlaufend ein aufblasbarer Balg 16 mit der Außenseite der Trommel 15 fluchtend positioniert werden. Auf der in bekannter Weise in Segmente geteilte, somit expandierbar und einfahrbar ausgeführten Hilfstrommel 15 wird zuerst der Abschnitt 4a der Base 4 durch Spulen eines Materialstreifens erstellt, wobei der Spulvorgang bis auf die Außenseite des Balges 15 fortgesetzt wird. Anschließend wird der zugehörige Capabschnitt 5a durch Spulen eines weiteren Materialstreifens erstellt, wobei der Balg 16 nicht belegt wird. Nachdem der Capabschnitt 5a fertig gespult ist, wird der Balg 16 aufgebläht und schlägt dabei die auf ihm erstellten Windungen der Laufstreifenbase 4 in Richtung Cap 5 um, sodass sich an der umlaufenden Stirnseite der Cap 5 ein Streifen 6 mit einer elektrisch leitfähigen Kautschukmischung befindet.

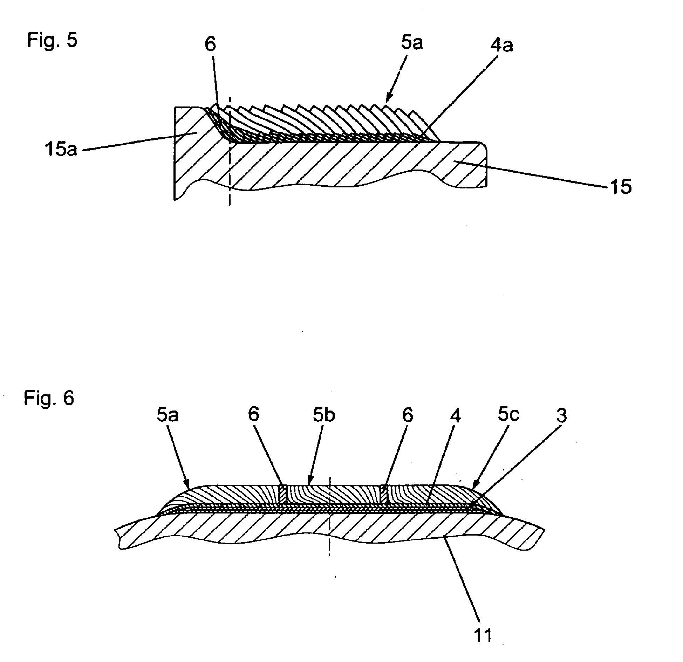

Eine Alternative der Herstellung des elektrisch leitfähigen Streifens aus dem Material der Laufstreifenbase 4 zeigt Fig.5. Bei dieser Ausführmgsvariante ist die Hilfstrommel 15 einseitig mit einer umlaufenden Rampe 15a versehen oder es wird ein derart ausgeführtes Bauteil an die Hilfstrommel 14 herangefahren. Die Rampenschräge erstreckt sich zumindest über die spätere Dicke des Laufstreifens. Der Materialstreifen der Laufstreifenbase 4a wird auch auf der ansteigenden umlaufenden Schräge der Rampe 15a gespult. Bei gespultem Laufstreifencapabschnitt 5a verläuft ein Abschnitt der Laufstreifenbase 4a bis an die Oberseite des gespulten Teils 5a der Laufstreifencap 5 und bildet derart den Streifen 6. Bei dieser Ausführungsvariante wird der Laufstreifencapabschnitt 5a mit einem gegengleich ausgeführten Laufstreifencapabschnitt zusammengefügt.

Das auf der Hilfstrommel erstellte Bauteil kann durchgeschnitten werden, um das Aufbringen auf den Gürtelverband zu erleichtern.

Die Teilung der Laufstreifencap in zwei Abschnitte 5a, 5b kann auch auf asymmetrische Weise vorgenommen werden. Fig. 6 zeigt eine Teilung der Laufstreifencap in drei Abschnitte 5a, 5b, 5c. Bei diesen Varianten der Erfindung können die Base 4 und die Cap 5 analog zu den beschriebenen Ausführungsbeispielen aufgebaut werden. Bei der in Fig. 6 gezeigten Ausführungsvariante sind im fertigen Reifen zwei umlaufende Einsätze 6 aus elektrisch leitfähigem Gummi enthalten.

## Patentansprüche

1. Verfahren zur Herstellung eines Fahrzeugluftreifens mit einem eine elektrisch leitfähige Laufstreifenbase (4) und eine elektrisch nicht leitfähige Laufstreifencap (5) aufweisenden Laufstreifen, wobei sowohl die Laufstreifencap (5) als auch die Laufstreifenbase (4) jeweils durch Spulen von zumindest einem Materialstreifen (10) aus einer entsprechenden Kautschukmischung erstellt werden und zumindest die Laufstreifencap (5) in mehreren, vorzugsweise zwei Teilen bzw. Abschnitten (5a, 5b, 5c) gespult wird, die Capteile (5a, 5b, 5c) auf einem bereits aufgebauten Gürtelpaket (3) des Fahrzeugluftreifens stirnseitig zusammengefügt werden, und wobei ein zwischen den Capteilen (5a, 5b, 5c)in Umfangsrichtung umlaufender Streifen bzw. Einsatz (6) aus einer elektrisch leitfähigen Kautschukmischung zwischen der Außenseite der Laufstreifencap (5) und der Laufstreifenbase (4) eine elektrisch leitfähige Verbindung herstellt,
**dadurch gekennzeichnet,**
**dass** zumindest ein Abschnitt (5a) der Laufstreifencap (5) gemeinsam mit dem zugehörigen Abschnitt (4b) der Laufstreifenbase (4) auf einer Hilfstrommel aufgebaut wird, wobei der Streifen (6) aus der elektrisch leitfähigen Mischung aus einem Abschnitt (4a) der Laufstreifenbase (4) erstellt wird, und der derart aufgebaute Laufstreifenteil auf das Gürtelpaket (11) transferiert wird.

2. Verfahren nach Anspruch 1, **dadurch gekennzeichnet, dass** ein Abschnitt (4a) der Laufstreifenbase (4) direkt auf dem Gürtelpaket (3) aufgebracht wird.

3. Verfahren nach Anspruch 1 oder 2, **dadurch gekennzeichnet, dass** ein Abschnitt (5a) der Laufstreifencap (5) auf den bereits auf dem Gürtelpaket (3) aufgebrachten Abschnitt (4a) der Laufstreifenbase (4) aufgebracht wird.

4. Verfahren nach Anspruch 1, **dadurch gekennzeichnet, dass** der Laufstreifenbaseabschnitt (4a) den zugehörigen Abschnitt (5a) der Laufstreifencap (5) überragend gespult wird und der überragende Teil auf die Stirnseite des Abschnittes (5a) der Laufstreifencap (5) umgeklappt wird.

5. Verfahren nach Anspruch 4, **dadurch gekennzeichnet, dass** der überragende Teil des Laufstreifenbaseabschnittes (4a) auf die Außenseite eines aufgeblasenen Balges (16) gespult wird.

6. Verfahren nach Anspruch 4, **dadurch gekennzeichnet, dass** der überragende Teil des Laufstreifenbaseabschnittes (4a) auf eine schräge Rampe (15a) gespult wird, welche auf die spätere Dicke des Laufstreifens ansteigt.

## Claims

1. Method for manufacturing a pneumatic tyre for a vehicle, with a tread which has an electrically conductive tread base (4) and an electrically nonconductive tread cap (5), wherein both the tread cap (5) and the tread base (4) are respectively produced by coils of at least one material strip (10) made of a corresponding rubber mixture, and at least the tread cap (5) is wrapped in a plurality of parts or sections (5a, 5b, 5c), preferably two, the cap parts (5a, 5b, 5c) are joined at the ends on a belt package (3), already built up, of the vehicle pneumatic tyre and wherein a strip or insert (6) which runs around between the cap parts (5a, 5b, 5c) in the circumferential direction and is composed of an electrically conductive rubber mixture between the outside of the tread cap (5) and the tread base (4) produces an electrically conductive connection,
**characterized**
**in that** at least one section (5a) of the tread cap (5) is built up, together with the associated section (4b) of the tread base (4), on an auxiliary drum, wherein the strip (6) is produced from the electrically conductive mixture comprised of a section (4a) of the tread base (4), and the tread part which is built up in this way is transferred to the belt package (11).

2. Method according to Claim 1, **characterized in that** a section (4a) of the tread base (4) is applied directly to the belt package (3).

3. Method according to Claim 1 or 2, **characterized in that** a section (5a) of the tread cap (5) is applied to that section (4a) of the tread base (4) which has already been applied to the belt package (3).

4. Method according to Claim 1, **characterized in that** the tread base section (4a) is wrapped onto the associated section (5a) of the tread cap (5) in a protruding fashion, and the protruding part is folded over onto the end side of the section (5a) of the tread cap (5).

5. Method according to Claim 4, **characterized in that** the protruding part of the tread base section (4a) is wrapped onto the outside of an inflated bladder (16).

6. Method according to Claim 4, **characterized in that** the protruding part of the tread base section (4a) is wrapped onto an oblique ramp (15a) which increases to the later thickness of the tread.

## Revendications

1. Procédé de fabrication d'un bandage pneumatique pour roue de véhicule qui présente une bande de roulement dotée d'une base électriquement conductrice (4) de bande de roulement et d'un chapeau non électriquement conducteur (5) de bande de roulement,
tant le chapeau (5) de la bande de roulement que la base (4) de la bande de roulement étant formés par enroulement d'au moins un ruban de matériau (10) constitué d'un mélange de caoutchouc correspondant et
au moins le chapeau (5) de la bande de roulement étant enroulé en plusieurs parties ou tronçons (5a, 5b, 5c), de préférence deux,
les parties de chapeau (5a, 5b, 5c) étant rassemblées frontalement sur un ensemble de ceinture (3) déjà formé du bandage pneumatique de roue de véhicule,
un ruban ou garniture (6) périphérique constitué d'un mélange de caoutchouc électriquement conducteur et entourant les tronçons de chapeau (5a, 5b, 5c) dans la direction périphérique établissant une liaison électriquement conductrice entre le côté extérieur du chapeau (5) de la bande de roulement et la base (4) de la bande de roulement,
**caractérisé en ce que**
au moins un tronçon (5a) du chapeau (5) de la bande de roulement est formé sur un tambour auxiliaire en même temps que le tronçon associé (4b) de la base (4) de bande de roulement,
**en ce que** le ruban (6) constitué d'un mélange électriquement conducteur est constitué d'un tronçon (4a) de la base (4) de la bande de roulement et
**en ce que** la partie de la bande de roulement ainsi formée est transférée sur l'ensemble de ceinture (11).

2. Procédé selon la revendication 1, **caractérisé en ce qu'**un tronçon (4a) de la base (4) de la bande de roulement est appliqué directement sur l'ensemble de ceinture (3).

3. Procédé selon les revendications 1 ou 2,
**caractérisé en ce qu'**un tronçon (5a) du chapeau (5) de la bande de roulement est appliqué sur le tronçon (4a) de la base (4) de la bande de roulement déjà appliqué sur l'ensemble de ceinture (3).

4. Procédé selon la revendication 1, **caractérisé en ce que** le tronçon (4a) de la base de la bande de roulement est enroulé en débordant du tronçon associé (5a) du chapeau (5) de la bande de roulement et **en ce que** la partie en débord est rabattue sur le côté frontal du tronçon (5a) du chapeau (5) de la bande de roulement.

5. Procédé selon la revendication 4, **caractérisé en ce que** la partie en débord du tronçon (4a) de la base de la bande de roulement est enroulée sur le côté extérieur d'un soufflet (16) gonflé.

6. Procédé selon la revendication 4, **caractérisé en ce que** la partie en débord du tronçon (4a) de la base de la bande de roulement est enroulé sur une rampe oblique (15a) qui remonte jusqu'à l'épaisseur ultérieure de la bande de roulement.
